(19) Europäisches Patentamt
European Patent Office
Office européen des brevets

(11) EP 1 516 016 B1

(12) **EUROPEAN PATENT SPECIFICATION**

(45) Date of publication and mention
of the grant of the patent:
**09.01.2013 Bulletin 2013/02**

(51) Int Cl.:
*C08L 67/02* (2006.01)    *C08L 25/12* (2006.01)
*C08J 3/22* (2006.01)    *D01F 8/14* (2006.01)
*C08L 67/02* (2006.01)    *C08L 25/12* (2006.01)
*C08L 53/02* (2006.01)    *C08L 67/02* (2006.01)
*C08L 25/12* (2006.01)    *C08L 23/08* (2006.01)
*C08L 25/12* (2006.01)    *C08L 67/02* (2006.01)
*C08L 53/02* (2006.01)    *C08L 25/12* (2006.01)
*C08L 67/02* (2006.01)    *C08L 23/08* (2006.01)

(21) Application number: **03760694.4**

(22) Date of filing: **17.06.2003**

(86) International application number:
**PCT/EP2003/007123**

(87) International publication number:
**WO 2004/000938 (31.12.2003 Gazette 2004/01)**

(54) **POLYMERIC BLENDS AND USE THEREOF**

PLOYMERZUSAMMENSETZUNG UND IHRE VERWENDUNG

MELANGES POLYMERES ET LEUR UTILISATION

(84) Designated Contracting States:
**AT BE BG CH CY CZ DE DK EE ES FI FR GB GR HU IE IT LI LU MC NL PT RO SE SI SK TR**

(30) Priority: **21.06.2002 IT MI20021373**

(43) Date of publication of application:
**23.03.2005 Bulletin 2005/12**

(73) Proprietor: **Effeci Engineering S.A.S. di Fochesato Antonio &
C.
36015 Schio-Vicenza (IT)**

(72) Inventor: **FOCHESATO, Antonio
I-36015 Schio (IT)**

(74) Representative: **Bottero, Carlo et al
Barzanò & Zanardo Milano S.p.A.
Via Borgonuovo, 10
20121 Milano (IT)**

(56) References cited:
• **PATENT ABSTRACTS OF JAPAN vol. 012, no. 365 (C-532), 29 September 1988 (1988-09-29) & JP 63 118319 A (ASAHI CHEM IND CO LTD), 23 May 1988 (1988-05-23)**
• **PATENT ABSTRACTS OF JAPAN vol. 011, no. 200 (C-431), 27 June 1987 (1987-06-27) & JP 62 021817 A (TEIJIN LTD), 30 January 1987 (1987-01-30)**
• **PATENT ABSTRACTS OF JAPAN vol. 006, no. 040 (C-094), 12 March 1982 (1982-03-12) & JP 56 157449 A (TORAY IND INC), 4 December 1981 (1981-12-04)**

**Description**

The present invention relates to polymeric blends and use thereof, in particular their use in the production of textile fibers based on polyethylene terephthalate (PET) and its copolymers.

In particular, the polymeric blends according to the present invention are used for suppressing or reducing the crystallization effect induced by the spinning or drawing rate in textile fibres based on polyethylene terephthalate (PET) and its copolymers, polybutylene terephthalate (PBT) and its copolymers, polymethyl terephthalate and its copolymers.

Most of the polymers used for the production of textile fibers are of the semi-crystalline type in the solid state. The crystalline form of the polymer is destroyed at the total melting temperature (Tm). A thermoplastic polymer crystallizes due to a physical effect relating to the physics of heat. The amorphous state of a polymer is the state of maximum disorder, and also the state of minimum energy of its molecular structure. A polymer therefore needs energy to reach the crystalline state, and, in fact, it absorbs energy during crystallization, normally in the form of heat. The energy absorption continues until the crystalline state is reached, when the polymer releases, all at once, the whole excess energy. This rapid release of energy is demonstrated by the exothermic peak which appears in the DSC (Differential Scanning Calorimeter) tracks.

The polymer remains in the crystalline state up until the total melting point (Tm), which corresponds to the temperature at which all the crystallites have melted and the polymer is therefore in the amorphous state.

In the case of textile fibers, the crystallization of the polymer takes place as a result of the orientation of the molecular chains during extrusion and the subsequent filament drawing process. Fibre drawing is an operation which is necessary for conferring elasticity, resilience, tenacity and other physical and mechanical characteristics to said fibers.

The polymer undergoes a first orientation of the molecular chains during the extrusion process, when the melted polymer is forced through the holes of the dies and, after cooling the fiber thus obtained, a first crystallization takes place.

The crystallinity percentage increases during the collecting process of the filaments, even when the drawing ratio is low, as in the case of POY (Partially Oriented Yarns), as the crystallinity of the yarns increases with an increase in the collecting rate of the filaments.

This phenomenon is known as "Speed Induced Crystallinity" and is due to the kinetic energy necessary for collecting the filaments at high speed (> 3500 m/min). Said kinetic energy is absorbed by the filaments and used by the polymer for changing state, i.e. for crystallizing. The higher the collection rate (and consequently the amount of energy) the higher the crystallinity degree acquired by the polymer will be.

The increase in crystallinity of the polymer is shown both by DSC analysis and X-ray birefringence.

In practice, this phenomenon sets severe limits to the possibility of obtaining POY, MDY, FDY and HT fibers with good textile characteristics, by collecting the filaments at high rates, as the high crystallinity makes the fibre rigid and the elasticity of the fibre is too low.

This factor considerably limits the possibility of subjecting the yarn to subsequent processing to produce high tenacity yarns (HTY) or textured draw yarns (FDY).

This phenomenon represents a particularly serious problem in the case of the high-speed spinning of polyethyleneterephthalate (PET) polyester and its copolymers (COPET). With the traditional systems, in fact, the maximum spinning rate for a PET is equal to about 3200 m/min.

A polyester fibre spun with polymers having an intrinsic viscosity (IV) ranging from 0.62 to 0.64 dl/g (measured in orthochlorophenol), collected at 3200 m/min, has a residual elongation equal to 130%. The same fibre collected at 5000 m/min has a residual elongation of 55-58%.

This physical phenomenon is particularly evident in PET and COPET polyester in all spinning systems of these polymers and this problem is consequently present in the production systems of polyester PET and COPET such as:

- spinning of POY (partially oriented yarn);
- spinning of MDY (medium draw yarn);
- spinning of FDY (fully draw yarn);
- spinning of HTY (high tenacity yarn);
- spoundbonded spinning;
- spinning of fibres in tow and flock form;
- spinning of POY mono-component microfibres;
- spinning of POY bi-component microfibres;
- high-speed texturization of POY.

This problem therefore exists regardless of the spinning system used and consequently occurs both in spinning systems using PET or COPET granules as raw material, and in what is known as direct spinning systems where the spinning process is directly effected immediately after the polycondensation reactor (i.e. eliminating the granulation phase of the polymer).

The above "speed induced crystallinity" phenomenon therefore greatly limits the possibility of exploiting existing spinning plants at their maximum production capacity.

Existing spinning plants have in fact already been capable for some time of operating for polyester polymers at collection rates ranging from 4000 to 5500 m/min, rather than 2800-3200 m/min, as is currently the case.

This operating limit evidently involves high production costs of PET and COPET fibres and also makes it impossible to obtain the high-speed texturization of yarns with good textile characteristics in the case of POY fibres (> 850 m/min).

In their attempts to solve this technical problem, textile experts have only reached partially positive results with extremely sophisticated spinning-collection systems, which however are still at least partly experimental and are extremely complex and expensive.

Attempts have also been made to operate using chemical methods, i.e. by chemically modifying the polymer: a first result was obtained in patent EP-A-0154425 (ICI) in which a new term "WUSS" (Wind-Up-Suppression-System) has been invented to express the rheological phenomenon of the chemical modification of the fibres. This system comprises the use of an additive consisting of a polymer immiscible with the main polymer. In particular EP-A-0154425 describes the addition of an immiscible polymer in a quantity which varies from 0.1 to 10% in the spinning of PET (polyethylene terephthalate) polyester or nylon 66, having a high intrinsic viscosity. The immiscible polymer is selected from polyethylene, polypropylene, polyethylene glycol or nylon 66 in the case of polyethylene terephthalate or from polyethylene, polypropylene, polyethylene glycol or polyethylene terephthalate in the case of nylon 66.

The addition of nylon 66 to PET is preferred as it allows the polyester fibre to be spun at 2000 m/min, with an increase in the production capacity of up to 50%.

The increase in the production capacity is linked to the increase in the spinning and collecting rate according to the following formula:

$$\frac{(1+E'/100)\ (1+E/100)}{(1+E/100)} \times 100 \quad (1)$$

If an extruded filament has a certain ultimate elongation percentage defined as E, then the maximum drawing ratio to which the filament can be subsequently subjected will be (1 + E/100).

If a second extruded filament has a higher ultimate elongation defined as E', it will be possible to subject this filament to a higher drawing ratio equal to (1+E' /100).

In order to produce extruded and draw filaments with the same textile titer expressed in decitex (d) with the maximum drawing ratios, the extruded filaments must however have a titer of d(1+E/100) and d(1+E'/100), respectively.

If both filaments are spun at the same rate, the quantities produced will be proportional to their titer in decitex and the increase percentage of the second filament will be in relation to equation [1].

It is therefore evident that the reduction and/or suppression of the orienting of the filament (and the consequent decrease in the crystallinity of the polymer) allows a considerable increase in the spinning rate.

The additive and process according to EP-A-0154425, however, has the following disadvantages: the addition of polyamide 66 to the polyester allows a POY thread to be obtained, which however must be immediately subjected to the further processing required. After a very short time, in fact, the polyamide tends to re-crystallize making the subsequent operations, for example drawing, texturization, etc., extremely difficult.

Furthermore, the additives indicated in EP-A-0154425 have considerable dyeability problems of the fibre thus obtained. Using dispersed dyes, in fact, which are the only dyes which colour polyethylene, polyamide is dyed differently. It is thus immediately evident that by using the standard dyeing procedures, there is no uniformity of colour on the yarn and/or on the fabric.

The state of the art also comprises other documents which attempt to solve the technical problems described above by means of suitable additives. JP 56-85420 (Teijin) discloses the addition to polyamide fibres of a quantity of polycarbonate (PC) ranging from 0.5% to 10%; EP 0035796 (Teijin) describes the addition to PET and COPET polyester fibres of polysulfone (PSU) in a quantity ranging from 1% to 10%. EP-A-0041327 (ICI) describes the addition to polyester fibres of a quantity ranging from 1% to 15% of liquid crystals (LCP). EP-A-0047464 (Teijin) discloses the addition to polyester fibres of a quantity of 1-4 polymethylpentene which varies from 0.2% to 10%. EP 0631638 (Akzo) describes the addition to polyester fibres of polymethylmethacrylate imidized in a quantity ranging from 0.1% to 5%.

EP-A-0860524 (Zimmer AG) describes the addition to polyester fibres of high molecular weight polymethylmethacrylate in a quantity varying from 0.3% to 5%. F1-nally, WO 99/07927 (Degussa AG) discloses the addition of immiscible polymers such as vinyl acetate, esters of acrylic acid, vinyl chloride.

These documents, however, have identified and described an additive which, only functions for a single group of textile fibres and not with different types of fibres. Furthermore, all the adding systems mentioned above require a modification of the spinning plants, i.e. special engineering systems with a very high cost increase. These additives, moreover, still create problems relating to the dyeing of the textile fibre.

In conclusion, all the solutions proposed have problems with respect to the spinning or dyeability of the yarn in the production phase.

Other examples are disclosed in the following Japanese applications. JP 63118319 discloses a composition composed of: (A) a thermoplastic polyester (e.g. PET or PBT), (B) a vinyl copolymer containing glycidyl methacrylate and (C) a block copolymer composed of a vinyl aromatic compound polymer block (preferably styrene) and an olefin compound polymer block (preferably butadiene or isoprene.

JP 62021817 relates to a polymeric composition for use in ultra-high speed spinning of polyester fibers. The composition comprises a PET polymer modified by adding polymethylmethacrylate having a solubility parameter of 9-12 and a melt index of $\leq 4$.

JP 56157449 relates to a polybutylene terephthalate polymer composition with modified moldability and fiber therefrom. The polymer composition includes polybutylene terephthalate which is compounded with polystyrene or polymethylacrylate.

The polymeric blend according to the present invention allows the drawbacks which characterize the known art, to be overcome.

In particular, an objective of the present invention is to produce additives which allow the high-speed spinning of PET and COPET thermoplastic polymers, using any spinning system, maintaining the tenacity and ultimate elongation properties unaltered, with an increase in productivity and consequently overcoming the limits which characterize the known art.

An object of the present invention relates to polymeric blends comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene)elastomers or SBS (styrene-butadiene-styrene) elastomers and/or neutralized ionomeric EEA (ethylene-ethyl-acrylate) and/or polysiloxanes.

A further object of the present invention relates to a polymeric blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene) elastomers or SBS (styrene-butadiene-styrene) elastomers and/or neutralized ionomeric EEA (ethylene-ethyl-acrylate) and/or polysiloxanes, in masterbatch form.

An object of the present invention also relates to the use of a polymer blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene) elastomers or SBS (styrene-butadiene-styrene) elastomers and/or neutralized ionomeric EEA (ethylene-ethyl-acrylate) and/or polysiloxanes, as additive for polymers to be spun in the high-speed spinning at a speed higher than 3500 m/min of polyester PET, COPET, PBT and PTT fibres.

A fundamental advantage of the polymeric blends according to the present invention is that, in any percentage of the components forming them, they suppress the physical phenomenon known as "crystallinity induced speed" in the high-speed spinning of PET, COPET, PBT and PTT polyester fibres. It this way, it is possible to effect the spinning and collection of these fibres at rates which are 50% to 100% higher than those currently used, without altering the characteristics of the fibres.

Another advantage of the polymeric blends according to the present invention consists in the improvement in the dyeability of polyester fibres. This in fact allows fibres to be produced with deep colour shades, using normal dyeing systems of polyester fibres.

The polymeric blends according to the present invention preferably comprise ionomeric EEA neutralized with sodium or zinc salts.

More specifically, the polysiloxanes are high molecular weight polysiloxanes.

In particular, the polymeric blends according to the present invention comprise the following component percentages: styrene-acrylonitrile (SAN), from 60 to 90% by weight, polyethylene terephthalate homopolymer (PET) or copolymer (COPET), or polyethylene terephthalate glycolate (PET-G), with an intrinsic viscosity (IV) equal to or higher than 0.78 dl/g, from 10 to 40% by weight, SEBS (styrene-ethylene-butadiene-styrene)elastomers or SBS (styrene-butadiene-styrene) elastomers, from 1 to 3% by weight, and/or neutralized ionomeric EEA, from 1 to 3% by weight, and/or polysiloxanes, from 1 to 3% by weight with respect to the total weight of the polymeric mixture.

The polymeric blends according to the present invention can also comprise antioxidant and process thermostabilizing compounds such as hindered phenols or phosphites or their mixtures.

Furthermore, the polymeric blends according to the present invention can contain various types of oilants and antistatic agents or their mixtures.

The blends are prepared using single-screw or co-rotating twin-screw extruders, equipped with screws suitable for the processing of the above types of polymers so as to obtain concentrates in the form of masterbatches.

A special process developed by Effeci Engineering allows extrusion to be effected in the form of granular masterbatches of polymers immiscible with each other.

The masterbatch is added to the polymer to be spun in a quantity varying from 0.1 to 15% by weight, preferably from 2 to 10% by weight.

The masterbatches are added to the polymer to be modified in various ways such as:

- by means of volumetric or gravimetric hoppers at the inlet of the extruder;
- premixed with the polymer to be spun before its crystallization and drying;
- using a secondary extruder (side extruder), injected directly into the polymer to be spun in the molten state;
- directly inside the polycondensation reactor during the final vacuum phase by means of a special vacuum hopper;
- directly inside the polycondensation reactor using a volumetric pump with an incorporated rotating mixer.

An object of the present invention also relates to a spinning process of a textile fibre based on a polymer selected from PET, COPET, PBT and PTT polyester resins, wherein, before the spinning, a quantity ranging from 0.1 to 15% of a granular masterbatch obtainable by the extrusion of a polymeric blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene) elastomers or SBS (styrene-butadiene-styrene) elastomers and/or neutralized ionomeric EEA and/or polysiloxanes, is added to the polymer to be spun.

The granular masterbatch is preferably added in a quantity ranging from 0.5% to 10% by weight.

An object of the present invention also relates to a textile fibre which can be obtained by means of the process described above.

In particular, the textile fibre according to the present invention can be textured (volumized) at a high speed.

Some specific examples of blends according to the present invention, which differ according to the type of spinning process used, are the following:

- blend for the modification of PET, COPET, PBT, PPT polyesters for the production of POY thread:

| | | |
|---|---|---|
| A) | PET polyester (IV 0.78 dl/g) | 15%; |
| | TPE SEBS | 1%; |
| | styrene-acrylonitrile (SAN) | 84%; |
| | antioxidants and thermo-stabilizers | 0.5 phr. |
| B) | PET polyester (IV 0.78 dl/g) | 15%; |
| | ionomeric EEA | 1%; |
| | styrene-acrylonitrile (SAN) | 84%; |
| | antioxidants and thermo-stabilizers | 0.5 phr. |
| C) | PET polyester (IV 0.95 dl/g) | 15%; |
| | TPE SEBS | 1%; |
| | styrene-acrylonitrile (SAN) | 84%. |

It has been observed that, in fibres containing the polymeric blends according to the present invention, the elastic modulus is lower and this proves to be in line with the reduction effect of the crystallinity as the higher the crystallinity percentage in the polymers, the higher the elastic modulus will be.

The characteristics and advantages of the polymeric blend according to the present invention will appear more evident from the following detailed illustrative description, referring to the following examples.

EXAMPLE 1

A polyethyleneterephthalate polymer with an intrinsic viscosity (IV) equal to 0.64 dl/g (viscosity measured in orthochlorophenol) was extruded at a temperature of 295°C in the form of a continuous POY thread of 248/48 den, with a fineness of the individual filament of 5.2 den and collected in the form of cylindrical bobbins at a rate of 4200 m/min with the addition of 1% of a masterbatch of the blend previously indicated with A) with the following results:

Tenacity          2.55 g/den;

(continued)

| Ultimate elongation | 135%; |
| Elastic modulus | 9 g/den. |

The addition of the masterbatch in a quantity varying from 2 to 10% by weight improves the dyeability of the polyester fibres and allows fibres to be produced with deep shades, using the normal polyester dyeing systems. This is an extremely important and new result, as so far the production of deep shade polyester fibres could only be obtained with copolymers modified in the reactor phase.

The addition of the masterbatch in a quantity varying from 3 to 10% by weight with respect to the total weight allows the production of high shrinkage fibres (HS fibres). High shrinkage fibres are polyester fibres having a shrinkage of 40 to 60% in water at 100°C.

A polyester polymer with an IV of 0.64 dl/g, spun and collected at 4000 m/min has a shrinkage in hot water of 30%, the same polymer containing 4% of blend A), spun and collected at 4000 m/min has a shrinkage in hot water of 60%.

EXAMPLE 2

A polyethyleneterephthalate polymer with an intrinsic viscosity (IV) equal to 0.64 dl/g (viscosity measured in orthochlorophenol) was extruded at a temperature of 295°C in the form of a continuous POY thread of 120/72 den, with a fineness of the individual filament equal to 1.6 den and collected in the form of cylindrical bobbins at a rate of 4200 m/min with the addition of 1% of a masterbatch of the blend previously indicated with A) with the following results:

| Tenacity | 2.65 g/den; |
| Ultimate elongation | 134%; |
| Elastic modulus | 9.88 g/den. |

The same polyester polymer with no addition and spun and collected at 3000 m/min has the following parameters:

| Tenacity | 2.64 g/den; |
| Ultimate elongation | 130%. |

This evidently demonstrates that the polyester polymer (PET) with the additive and spun at 4000 m/min has the same characteristics as the polymer spun at 3000 m/min with a considerable increase in the production capacity of the spinning plant.

EXAMPLE 3

A polyethyleneterephthalate polymer with an intrinsic viscosity (IV) equal to 0.64 dl/g (viscosity measured in orthochlorophenol) was extruded at a temperature of 285°C in the form of a continuous POY thread of 120/72 den, with a fineness of the individual filament equal to 1.6 den and collected in the form of cylindrical bobbins at a rate of 4200 m/min with the addition of 1% of a masterbatch of the blend previously indicated with C) with the following results:

| Tenacity | 2.65 g/den; |
| Ultimate elongation | 136%; |
| Elastic modulus | 9.56 g/den. |

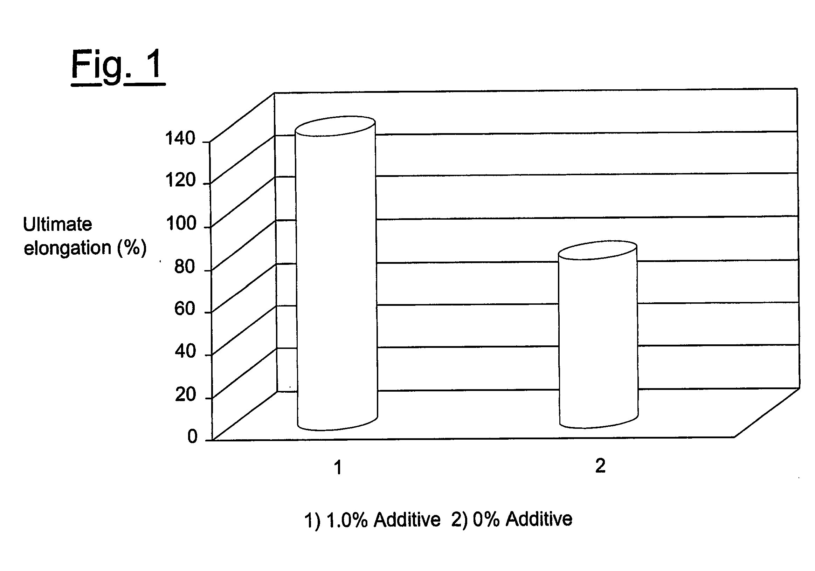

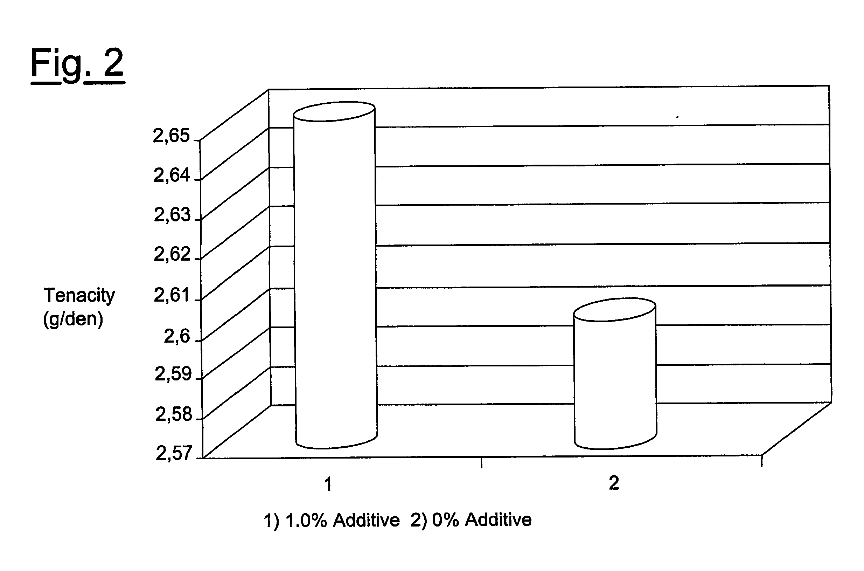

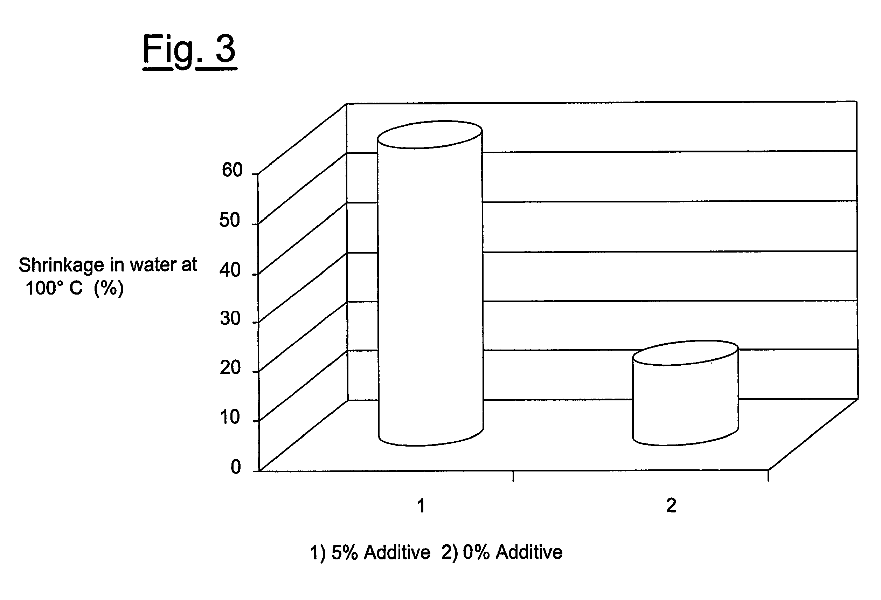

The enclosed figures 1, 2 and 3 graphically compare the tenacity, ultimate elongation and shrinkage values in water at 100°C for the polymer containing the additive and for the same polymer without the additive, in particular for a continuous POY polyester thread 1.6 den spun at 4200 m/min.

The same polyester polymer with no addition and spun and collected at 3000 m/min has the following parameters:

| Tenacity | 2.64 g/den; |
| Ultimate elongation | 130%. |

This evidently demonstrates that the polyester polymer (PET) with the additive and spun at 4200 m/min has the same characteristics as the polymer spun at 3000 m/min with a considerable increase in the production capacity of the spinning plant.

**Claims**

1. A polymeric blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene) elastomers or SBS (styrene-butadiene-styrene) elastomers and/or neutralized ionomeric EEA (ethylene-ethyl-acrylate) and/or polysiloxanes.

2. The polymeric blend according to claim 1, **characterized in that** it comprises polyethylene terephthalate homopolymer (PET) or copolymer (COPET), or polyethylene terephthalate glycolate (PET-G), with an intrinsic viscosity (IV) equal to or higher than 0.78 dl/g, TPE SEBS (styrene-ethylene-butadiene-styrene thermoplastic polymer elastomers), styrene-acrylonitrile (SAN) and antioxidants and thermo-stabilizers.

3. The polymeric blend according to claim 1, **characterized in that** it comprises polyethylene terephthalate homopolymer (PET) or copolymer (COPET), or polyethylene terephthalate glycolate (PET-G), with an intrinsic viscosity (IV) equal to or higher than 0.78 dl/g, ionomeric ethylene-ethyl-acrylate (EEA), styrene-acrylonitrile (SAN) and antioxidants and thermo-stabilizers.

4. The polymeric blend according to claim 1, **characterized in that** it comprises the following component percentages: styrene-acrylonitrile (SAN), from 60 to 90% by weight, polyethylene terephthalate homopolymer (PET) or copolymer (COPET), or polyethylene terephthalate glycolate (PET-G), with an intrinsic viscosity (IV) equal to or higher than 0.78 dl/g, from 10 to 40% by weight, SEBS (styrene-ethylene-butadiene-styrene)elastomers or SBS (styrene-butadiene-styrene) elastomers, from 1 to 3% by weight, and/or ionomeric EEA, from 1 to 3% by weight, and/or polysiloxanes, from 1 to 3% by weight with respect to the total weight of the polymeric mixture.

5. The polymeric blend according to any of the previous claims, in the form of a granular masterbatch.

6. A granular masterbatch obtained by the extrusion with single-screw or co-rotating twin-screw extruders, of a polymeric blend according to any of the claims from 1 to 4.

7. The use of a polymeric blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene) elastomers or SBS (styrene-butadiene-styrene) elastomers and/or neutralized ionomeric EEA (ethylene-ethyl-acrylate) and/or polysiloxanes, as additive for PET, COPET, PBT and PTT polyester polymers to be spun and collected at a speed higher than 3500 m/min.

8. The use of a polymeric blend according to claim 7, as additive wherein the blend is introduced directly into a reactor in the final polycondensation phase of PET and COPET by means of an auxiliary side extruder or by means of a volumetric pump with a dynamic or static blending system.

9. The use of a polymeric blend according to claim 8, as additive for the production of polyester fibres in flocks or threads of the high shrinkage type (HS fibres).

10. The use of a polymeric blend according to one of the claims from 7 to 9, in a quantity ranging from 0.1% to 15% by weight.

11. The use of a polymeric blend according to one of the claims from 7 to 9, in a quantity ranging from 2% to 10% by weight.

12. A spinning process of a textile based on a polymer selected from PET, COPET, PBT and PTT polyester resins, in which, before the spinning, a quantity ranging from 0.1 to 15% of a granular masterbatch obtainable by the extrusion of a polymeric blend comprising styrene-acrylonitrile (SAN), polyethylene terephthalate homopolymer (PET) or copolymer (COPET), or polyethylene terephthalate glycolate (PET-G), with an intrinsic viscosity (IV) equal to or higher than 0.78 dl/g, SEBS (styrene-ethylene-butadiene-styrene)elastomers or SBS (styrene-butadiene-styrene) elastomers and/or neutralized ionomeric EEA and/or polysiloxanes, is added to the polymer to be spun.

**13.** The process according to claim 12, **characterized in that** the granular masterbatch is added in a quantity ranging from 0.5 to 10% by weight.

**14.** A textile fibre obtained by means of the process according to one of claims 12 and 13.

**15.** The textile fibre according to claim 14, **characterized in that** it is dyed with deep shades by means of standard dyeing methods.

**Patentansprüche**

**1.** Polymermischung umfassend Styrol-Acrylnitril (SAN), Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g, SEBS (Styrol-Ethylen-Butadien-Styrol) Elastomere oder SBS (Styrol-Butadien-Styrol) Elastomere und/ oder neutralisiertes, ionomeres EEA (Ethylen-Ethylacrylat) und/oder Polysiloxane.

**2.** Polymermischung nach Anspruch 1, **dadurch gekennzeichnet, dass** sie Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g, TPE SEBS (thermoplastische Styrol-Ethylen-Butadien-Styrol-Polymerelastomere), Styrol-Acrylnitril (SAN) und Antioxidationsmittel sowie Thermostabilisatoren enthält.

**3.** Polymermischung nach Anspruch 1, **dadurch gekennzeichnet, dass** sie Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g, ionomeres Ethylen-Ethylacrylat (EEA), Styrol-Acrylnitril (SAN) und Antioxidationsmittel sowie Thermostabilisatoren enthält.

**4.** Polymermischung nach Anspruch 1, **dadurch gekennzeichnet, dass** sie folgende Komponentenanteile enthält: Styrol-Acrylnitril (SAN) zwischen 60 und 90 Gew.%, Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g zwischen 10 und 40 Gew.%, SEBS (Styrol-Ethylen-Butadien-Styrol) Elastomere oder SBS (Styrol-Butadien-Styrol) Elastomere zwischen 1 und 3 Gew.% und/oder ionomeres EEA zwischen 1 und 3 Gew.% und/oder Polysiloxane zwischen 1 und 3 Gew.% bezogen auf das Gesamtgewicht des Polymergemischs.

**5.** Polymermischung nach einem der vorstehenden Ansprüche, in Form eines Masterbatch-Granulats.

**6.** Masterbatch-Granulat, hergestellt durch Extrusion einer Polymermischung mit Einschnecken-Extrudern oder gleichsinnig drehenden Doppelschnecken-Extrudern nach einem beliebigen Anspruch von 1 bis 4.

**7.** Verwendung einer Polymermischung umfassend Styrol-Acrylnitril (SAN), Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g, SEBS (Styrol-Ethylen-Butadien-Styrol) Elastomere oder SBS (Styrol-Butadien-Styrol) Elastomere und/oder neutralisiertes, ionomeres EEA (Ethylen-Ethylacrylat) und/oder Polysiloxane als Zusatzstoff für PET, COPET, PBT und PTT Polyesterpolymere, die bei einer Geschwindigkeit von mehr als 3500 m/min versponnen und gesammelt werden.

**8.** Verwendung einer Polymermischung nach Anspruch 7, als Zusatzstoff, wobei die Mischung in der Polykondensationsendphase von PET und COPET mittels eines seitlichen Hilfsextruders oder einer volumetrischen Pumpe mit einer statischen oder dynamischen Mischanlage direkt in den Reaktor eingebracht wird.

**9.** Verwendung einer Polymermischung nach Anspruch 8, als Zusatzstoff für die Herstellung von Polyesterfasern in Flocken oder Fäden des Typs Hochschrumpffasern (HS-Fasern).

**10.** Verwendung einer Polymermischung nach einem der Ansprüche von 7 bis 9 in einer Menge zwischen 0,1% und 15 Gew.%.

**11.** Verwendung einer Polymermischung nach einem der Ansprüche von 7 bis 9 in einer Menge zwischen 2% und 10 Gew.%.

**12.** Spinnverfahren eines Gewebes auf der Basis eines Polymers, der ausgewählt ist aus PET, COPET, PBT und PTT Polyesterharzen, bei dem vor dem Spinnen ein Masterbatch-Granulat in einer Menge zwischen 0,1 und 15 %, das durch Extrudieren einer Polymermischung umfassend Styrol-Acrylnitril (SAN), Polyethylenterephthalat Homopolymer (PET) oder Copolymer (COPET) oder Polyethylenterephthalat-Glycolat (PET-G) mit einer intrinsischen Viskosität (IV) gleich oder größer 0,78 dl/g, SEBS (Styrol-Ethylen-Butadien-Styrol) Elastomere oder SBS (Styrol-Butadien-Styrol) Elastomere und/oder neutralisiertes, ionomeres EEA und/oder Polysiloxane gewonnen wird, zu dem zu spinnenden Polymer hinzugegeben wird.

**13.** Verfahren nach Anspruch 12, **dadurch gekennzeichnet, dass** das Masterbatch-Granulat in einer Menge zwischen 0,5 und 10 Gew.% hinzugegeben wird.

**14.** Textilfaser, die mittels eines Verfahrens nach einem der Ansprüche 12 und 13 gewonnen wird.

**15.** Textilfaser nach Anspruch 14, **dadurch gekennzeichnet, dass** sie mit Standardfärbeverfahren in intensiven Farbtönen gefärbt wird.


**Revendications**

**1.** Mélange polymère comprenant de l'acrylonitrile styrène (SAN), de l'homopolymère de polyéthylène téréphtalate (PET) ou du copolymère de polyéthylène téréphtalate (COPET), ou du glycolate de polyéthylène téréphtalate (PET-G), avec une viscosité intrinsèque (IV) égale ou supérieure à 0,78 dl/g, des élastomères SEBS (styrène-éthylène-butadiène-styrène) ou des élastomères SBS (styrène-butadiène-styrène) et/ou de l'EEA (éthylène-éthyle-acrylate) ionomère neutralisé et/ou des polysiloxanes.

**2.** Mélange polymère selon la revendication 1, **caractérisé en ce qu'**il comprend de l'homopolymère de polyéthylène téréphtalate (PET) ou du copolymère de polyéthylène téréphtalate (COPET), ou du glycolate de polyéthylène téréphtalate (PET-G), avec une viscosité intrinsèque (IV) égale ou supérieure à 0,78 dl/g, du TPE SEBS (élastomères polymères thermoplastiques de styrène-éthylène-butadiène-styrène), de l'acrylonitrile styrène (SAN) et des antioxydants et thermo-stabilisants.

**3.** Mélange polymère selon la revendication 1, **caractérisé en ce qu'**il comprend de l'homopolymère de polyéthylène téréphtalate (PET) ou du copolymère de polyéthylène téréphtalate (COPET), ou du glycolate de polyéthylène téréphtalate (PET-G), avec une viscosité intrinsèque (IV) égale ou supérieure à 0,78 dl/g, de l'éthylène-éthyle-acrylate ionomère (EEA), de l'acrylonitrile styrène (SAN) et des antioxydants et thermo-stabilisants.

**4.** Mélange polymère selon la revendication 1, **caractérisé en ce qu'**il comprend les pourcentages de composant suivants : acrylonitrile styrène (SAN), de 60 à 90% en poids, homopolymère de polyéthylène téréphtalate (PET) ou copolymère de polyéthylène téréphtalate (COPET), ou glycolate de polyéthylène téréphtalate (PET-G), avec une viscosité intrinsèque (IV) égale ou supérieure à 0,78 dl/g, de 10 à 40% en poids, élastomères SEBS (styrène-éthylène-butadiène-styrène) ou élastomères SBS (styrène-butadiène-styrène), de 1 à 3% en poids, et/ou EEA ionomère, de 1 à 3% en poids, et/ou des polysiloxanes, de 1 à 3% en poids par rapport au poids total du mélange polymère.

**5.** Mélange polymère selon l'une quelconque des revendications précédentes, sous la forme d'un mélange-maître granulaire.

**6.** Mélange-maître granulaire obtenu par l'extrusion avec des extrudeuses à vis unique ou à vis double en co-rotation, d'un mélange polymère selon l'une quelconque des revendications 1 à 4.

**7.** Utilisation d'un mélange polymère comprenant de l'acrylonitrile styrène (SAN), de l'homopolymère de polyéthylène téréphtalate (PET) ou du copolymère de polyéthylène téréphtalate (COPET), ou du glycolate de polyéthylène téréphtalate (PET-G), avec une viscosité intrinsèque (IV) égale ou supérieure à 0,78 dl/g, des élastomères SEBS (styrène-éthylène-butadiène-styrène) ou des élastomères SBS (styrène-butadiène-styrène) et/ou de l'EEA (éthylène-éthyle-acrylate) ionomère neutralisé et/ou des polysiloxanes, comme additif pour des polymères de polyester PET, COPET, PBT et PTT à filer et collecter à une vitesse supérieure à 3500 m/min.

**8.** Utilisation d'un mélange polymère selon la revendication 7 comme additif, dans lequel le mélange est introduit directement dans un réacteur dans la phase de polycondensation finale de PET et COPET au moyen d'une extrudeuse latérale auxiliaire ou au moyen d'une pompe volumétrique avec un système de mélange dynamique ou statique.

9. Utilisation d'un mélange polymère selon la revendication 8 comme additif pour la production de fibres de polyester en flocs ou filés du type à potentiel de retrait élevé (fibres HS).

10. Utilisation d'un mélange polymère selon une des revendications 7 à 9, dans une quantité comprise dans la plage de 0,1 % à 15% en poids.

11. Utilisation d'un mélange polymère selon une des revendications 7 à 9, dans une quantité comprise dans la plage de 2% à 10% en poids.

12. Procédé de filage d'un textile basé sur un polymère sélectionné parmi des résines de polyester de PET, COPET, PBT et PTT, dans lequel, avant le filage, une quantité comprise dans la plage de 0,1 à 15% d'un mélange-maître granulaire pouvant être obtenu par l'extrusion d'un mélange polymère comprenant de l'acrylonitrile styrène (SAN), de l'homopolymère de polyéthylène téréphtalate (PET) ou du copolymère de polyéthylène téréphtalate (COPET), ou du glycolate de polyéthylène téréphtalate (PET-G), avec une viscosité intrinsèque (IV) égale ou supérieure à 0,78 dl/g, des élastomères SEBS (styrène-éthylène-butadiène-styrène) ou des élastomères SBS (styrène-butadiène-styrène) et/ou de l'EEA ionomère neutralisé et/ou des polysiloxanes, est ajouté au polymère à filer.

13. Procédé selon la revendication 12, **caractérisé en ce que** le mélange-maître granulaire est ajouté dans une quantité comprise dans la plage de 0,5 à 10% en poids.

14. Fibre textile obtenue au moyen du procédé selon une des revendications 12 et 13.

15. Fibre textile selon la revendication 14, **caractérisée en ce qu'**elle est teinte avec des tonalités foncées au moyen de procédés de teinture standard.

# Fig. 1

Ultimate elongation (%)

140
120
100
80
60
40
20
0

1                                              2

1) 1.0% Additive   2) 0% Additive

EP 1 516 016 B1

Fig. 2

# Fig. 3

Shrinkage in water at 100° C (%)

60
50
40
30
20
10
0

1       2

1) 5% Additive   2) 0% Additive

EP 1 516 016 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0154425 A
- JP 56085420 A
- EP 0035796 A
- EP 0041327 A
- EP 0047464 A
- EP 0631638 A
- EP 0860524 A
- WO 9907927 A
- JP 63118319 B
- JP 62021817 B
- JP 56157449 B